Europäisches Patentamt

European Patent Office

Office européen des brevets

(11) Publication number: **0 646 627 A2**

# EUROPEAN PATENT APPLICATION

(21) Application number: **94202842.4**

(22) Date of filing: **01.10.94**

(51) Int. Cl.[6]: **C08L 77/02**, //(C08L77/02, 51:06)

(30) Priority: **05.10.93 IT MI932116**

(43) Date of publication of application:
**05.04.95 Bulletin 95/14**

(84) Designated Contracting States:
**AT BE CH DE DK ES FR GB GR IE LI LU MC NL PT SE**

(71) Applicant: **ENICHEM S.p.A.**
**Piazza della Repubblica, 16**
**I-20124 Milano (IT)**

(72) Inventor: **Princiotta, Gualtiero**
**Via Libertà, 50**
**I-98061 Brolo (Messina) (IT)**
Inventor: **Amico, Antonio**
**Via De Gasperi, 51**
**I-22064 Casatenovo (Como) (IT)**
Inventor: **Baldizzone, Renzo**
**Via Iannozi, 10**
**I-20097 San Donato Milanese (Milano) (IT)**

(74) Representative: **Fusina, Gerolamo et al**
**Ing. Barzanò & Zanardo Milano S.p.A,**
**Via Borgonuovo, 10**
**I-20121 Milano (IT)**

(54) **Use of a modified ultra low density polyethylene as an agent to endow engineering polymers with high impact characteristics.**

(57) Polymer blends based on 6 polyamide and at least one ultra low density polyethylene (ULDPE), suitably modified by functional group grafting, result to be suitable for applications in which good processability, good mechanical characteristics and excellent impact strength, also at low temperatures, are required.

EP 0 646 627 A2

The present invention relates to polymeric compositions essentially constituted by 6 polyamide and containing at least one ultra low density polyethylene (ULDPE; d < 0.900 g/cm$^3$), suitably modified by grafting with unsaturated monomeric compounds containing functional groups of acidic or anhydride type, or their derivatives.

The present invention also relates to the use of such compositions in order to manufacture parts displaying high impact strength both immediately after moulding, and at low temperatures, with their resilience values undergoing very small changes as the moisture content in the polymer varies.

It is known that polyamides in general and polycaprolactam in particular show low impact strength immediately after moulding, with this property being recovered over time owing to the progressive water absorption in the polymer. If, on the one hand, this feature, i.e., the capability of absorbing water, might be regarded as being a favourable property because, as said, it causes an increase to take place in impact strength values, on the other hand it may also prevent moulded pieces from being immediately used unless they are preliminarily submitted to further treatments (forced water absorption, also said "conditioning process"). Furthermore, water absorption is a characteristic displayed by all polyamides, which causes, as time goes on, a decrease in stiffness and permanent set values.

Another unfavourable consequence of water absorption is the progressive decrease in impact strength displayed over time by the manufactured pieces based on polyamides ("nylons"), aboveall at low temperatures.

From the prior art, a number of methods are known, which were proposed in the past in order to obviate the above drawbacks.

For example, a large number of methods were proposed which use different rubbers (EPR, EPDM, and so forth), which are capable of modifying polyamides behaviour; according to EP patent application No. 0 157 984, such a modification was undertaken by using a low density ethylene polymer (LLDPE) grafted with maleic anhydride; however, it was blended with a glass filled 66 polyamide, and, furthermore, no mention is made of the changes in mechanical characteristics with varying LLDPE density.

According to US 4,299,744, such a result is accomplished by adding particular polyesters, ionomeric resins and other aminic compounds or amino acids, to the polyamides.

US 5,180,788 discloses the use of an LLDPE polyethylene modified with a styrene-maleic anhydride copolymer in order to improve the impact strength properties of nylon without having to resort to the forced water treatment.

The present applicant has surprisingly found now that polymeric blends based on 6 polyamide and only one second component with high impact strength conferring function, based on ultra low density polyethylene (ULDPE) suitably modified by grafting with functional groups, display an excellent impact strength and, more generally, such a set of properties, which enable them to overcome all of the above discussed drawbacks, including those inherently displayed by the prior art, with no further additions of other substances.

In particular, the polymer blends according to the present invention proved to be suitable for manufacturing pieces displaying high impact strength both immediately after moulding and at low temperatures, and, above all, for manufacturing pieces which display small changes in resilience values with varying moisture levels in the polymer.

In fact, the present Applicant found that the polyamide based blends with previously grafted ultra low density polyethylene make it possible the pieces manufactured from them to be used down to temperatures of -40°C, without that a substantial decay occurs in the impact strength characteristics thereof, with the moisture level absorbed over time being substantially reduced; all the above causes the manufactured pieces to display a substantial dimensional stability together with a wider range of applications, including low temperature applications.

ULDPE polyethylene is an ethylene-co-alpha-olefins copolymer, in particular with alpha-(C$_4$-C$_{10}$)-olefinswhich, before being modified by grafting with an acidic or anhydride groups containing monomer, shows Melt Flow Rate values (MFR; as measured at 190°C under a load of 2.16 kg; ASTM D 1238) which are comprised within the range of from 1 to 4 g/10 minutes and density values of from 0.86 to 0.900 g/cm$^3$. After the grafting reaction, such polyethylenes contain a bound level of from 0.01 to 0.8 g of an acidic or anhydride containing monomer (maleic acid, fumaric acid, maleic anhydride, and so forth).

Therefore, the object of the present invention are polymeric compositions essentially constituted by:

(A) from 70 to 95% by weight of polycaprolactam having a relative viscosity, in 1% sulfuric acid, comprised within the range of from 2.5 to 4;

(B) from 5 to 30% by weight of ULDPE constituted by ethylene-co-alpha-olefin copolymer characterized by MFR values (190°C; 2.16 kg) comprised within the range of from 0.1 to 4 g/10 minutes and density values of from 0.860 to 0.900,

which copolymer contains a grafted amount of from 0.01 to 0.8%, of a monomer which contains acidic or anhydride groups.

A further purpose of the present invention is the use of such compositions in the manufacture of moulded and/or extruded pieces.

A preferred aspect of the present invention are polymeric compositions essentially constituted by:

(A) from 75 to 85% by weight of polycaprolactam having a relative viscosity, in chloroform, comprised within the range of from 2.5 to 4;

(B) from 15 to 25% by weight of ULDPE constituted by ethylene-co-alpha-olefin copolymer characterized by MFR values (190°C; 2.16 kg) comprised within the range of from 1 to 4 g/10 minutes and density values of from 0.860 to 0.900,

which copolymer contains a grafted amount of from 0.1 to 0.6 g, of a monomer which contains acidic or anhydride groups.

In current practice, the use is preferred of a caprolactam having a relative viscosity in chloroform comprised within the range of from 2.5 to 2.9, with ULDPE containing a grafted amount of from 0.1 to 0.6 g, of an acidic or anhydride groups containing monomer.

Suitable polyethylenes for preparing the polymeric compositions of the present invention are, as said, polyethylene grades with a very low density. In particular, ULDPE's (which in reality result to be copolymers of ethylene with alpha-olefins) are polymers known from the prior art. Also the methods for preparing them have been known for some years. They furthermore are commercially available materials. For example, a particularly suitable material for the purposes of the present invention is characterized by an MFR value (190°C; 2.16 kg) of 1.6 g/10 minutes and a density of 0.885 g/cm$^3$, and is available from the market under the trade name Clearflex CH GO from Enichem.

The functionalization of the above polyethylenes can be obtained by means of one from the several grafting techniques available from the prior art, which consists in grafting unsaturated monomers onto the polymeric chains by means of free radical initiators; the grafting step can be carried out in bulk and continuously, by using a single- or twin-screw extruder, owing to its high blending power and flexibility of use.

Among the several processes proposed in the past, the process which consists in grafting polyethylene by kneading on a twin-screw extruder in the presence of the monomer to be grafted and a possible free radical initiator, is to be preferred thanks to its easy feasibility. Such a process is disclosed, e.g., in US 4,762,890; US 3,177,269; US 4,639,495.

The preparation of the grafted polyethylenes reported in the Experimental Section of the instant patent application is disclosed in European patent application No. 93202065.4.

As acidic, ester or anhydride groups containing monomers to be used in the grafting reaction, those from the group comprising acrylic acid, ethyl acrylate, maleic acid, ethyl maleate, maleic anhydride, are particularly preferred. Among all, maleic anhydride is preferred.

As regards polycaprolactam, also known as "6 polyamide", it can be prepared according to any from the large number of methods known from the prior art.

Polycaprolactam used to prepare the compositions mentioned in the Experimental Section, is NIVIONPLAST 273, traded by ENICHEM.

The compositions according to the present invention may furthermore contain, besides (A) and (B) components, one or more component(s) selected from fillers, pigments, stabilizers and dyes.

The compositions of the present invention display good general characteristics of processability during the manufacturing step of pieces from them, with the resulting pieces displaying favourable application properties as well.

The properties which characterize the polymeric compositions according to the present invention can be summarized as follows:

(a) having used a suitably modified ultra low density polyethylene in order to give high impact strength properties to 6 polyamides not containing fillers or other reinforcer agents;

(b) having improved toughness (an improved toughness enables the polymeric composition to undergo a higher elongation, with all of the other characteristics remaining the same);

(c) with the composition being the same, higher elastic modulus values can be observed, than when an EPR polymer is used;

(d) improved mutual compatibility of both components in the molten state;

(e) high impact strength immediately after moulding;

(f) high impact strength values at low temperatures (down to -40°C).

The polymeric compositions according to the present invention are prepared by using any of the techniques known from the prior art.

As a representative example for such techniques, the compositions are prepared by blending the various components of a Werner twin-screw extruder Model ZSK (the same used for polyethylene grafting reactions).

In lieu of the Werner ZSK extruder, any blenders capable of yielding the same uniform blending could be anyway used.

Having so disclosed the general aspects of the present invention, the following specific examples are given for the only purpose of illustrating the details thereof; such examples should not be construed as being in any way limititative of the invention. All compositions and percent values set forth in the examples are by weight, unless differently stated.

Preparation of ULDPE's modified with maleic anhydride: Preparation of high impact strength conferring agent (A)

To a twin screw Werner ZSK extruder the following ingredients:
0.6% of maleic anydride,
0.05% of dicumyl peroxide,
7 % of CLEARFLEX CH GO VLDPE (density 0.885; MFR 1.6 g/10 min at 190°C, 2.16 kg) are fed, by means of a gravimetric metering unit, as powders, as a dry blend with each other, and, by means of a second gravimetric metering unit,
92.35% is fed of granules of the same CLEARFLEX CH GO polyethylene grade.

The twin screw extruder is set at the following temperature profile:
* 190°C, 200°C, 220°C, 230°C, 220°C.

The revolution speed of the screws is 200 rpm.

Inside the extruder, the free-radical-initiated grafting of maleic anhydride onto VLDPE takes place in a higher yield than 70%; all residual maleic anhydride is removed upstream from the twin screw extruder outlet port, by suitable venting.

Preparation of high impact strength conferring agent (B)

In the other formulation, the same procedure as above is used by starting from the same reactants, with the only difference that said reactants are fed at the following levels:
- maleic anhydride 0.4%;
- dicumyl peroxide 0.02%;
- CLEARFLEX CH GO powder 7%;
- CLEARFLEX CH GO granules 92.58%.

Also in this case, a yield of maleic anhydride grafting onto VLDPE is obtained which is higher than 70%. All residual maleic anhydride is removed through the venting port provided upstream from the twin screw extruder outlet port, by suitable venting.

Examples 1 and 2

In Examples 1 and 2, formulations using both VLDPE's (i.e., the high impact agent "A" and the high impact agent "B"), and prepared as disclosed above, are compared to those containing a copolymeric rubber; the results are reported in Table 1.

From Table 1, it may be seen that ULDPE grafted with 0.6% of maleic anhydride endows the polyamide-based polymeric composition with better elongation characteristics -- as compared to modified ethylenepropylene copolymers (EXXELOR VA 1801) -- with all other mechanical characteristics being the same.

Table 1

| Example N. | Pa, % | PE, % | EPR, % | M.A. (*) % | IZOD Impact Strength (ASTM D256) | | | E.M. (**) MPa | Elongation % |
|---|---|---|---|---|---|---|---|---|---|
| | | | | | 23°C, J/m | -20°C, J/m | -40°C L., J/m | | |
| Comparison Example | 80 | — | 20 | — | 630 | 140 | 130 | 1900 | 50 |
| 2 | 80 | 20 | — | 0.4 | 630 | 110 | 110 | 2120 | 50 |
| 3 | 80 | 20 | — | 0.6 | 560 | 120 | 120 | 1950 | 250 |

(*) M.A. = maleic anhydride

(**) E.M. = elastic modulus (ASTM D790)

By using the same procedure as disclosed above, low-density linear polyethylenes grafted with 0.4% of maleic anhydride by weight (Examples 4 and 5) were prepared and compared to the composition of Example 2.

The results are reported in Table 2.

5

From Table 2, one will observe that, by changing from a traditional LLDPE (Linear Low Density Polyethylene) (Example 5) to a linear ultra low density polyethylene (0.885 g/cm$^3$), with all other conditions being the same, the impact strength displayed by the resulting composition is increased from values of 140 J/m up to values of 631 J/m.

Table 2

| Example N. | Pa, % | PE, % | d, g/cm$^3$ | IZOD Impact Strength | | E.M. MPa | Elongation % |
|---|---|---|---|---|---|---|---|
| | | | | 23°C, J/m | -20°C, J/m | | |
| 2 | 80 | 20 | 0.885 | 630 | 110 | 2120 | 50 |
| 4 | 80 | 20 | 0.93 | 90 | — | 2370 | 30 |
| 5 | 80 | 20 | 0.91 | 140 | — | 2250 | 30 |

**Claims**

1.  Polymeric compositions essentially constituted by:
    (A) from 70 to 95% by weight of polycaprolactam having a relative viscosity, in 1% sulfuric acid, comprised within the range of from 2.5 to 4;
    (B) from 5 to 30% by weight of ULDPE constituted by ethylene-co-alpha-olefin copolymer characterized by MFR values (190°C; 2.16 kg) comprised within the range of from 0.1 to 4 g/10 minutes and density values of from 0.860 to 0.900,
    which polymer contains a grafted amount of from 0.01 to 0.8%, of a monomer which contains acidic or anhydride groups.

2.  Polymeric compositions as claimed in claim 1, essentially constituted by:
    (A) from 75 to 85% by weight of polycaprolactam having a relative viscosity, in chloroform, comprised within the range of from 2.5 to 4;
    (B) from 15 to 25% by weight of ULDPE constituted by ethylene-co-alpha-olefin copolymer characterized by MFR values (190°C; 2.16 kg) comprised within the range of from 1 to 4 g/10 minutes and density values of from 0.860 to 0.900,
    which polymer contains a grafted amount of from 0.1 to 0.8 g, of a monomer which contains acidic or anhydride groups.

3.  Polymeric compositions according to claim 1 and 2, characterized in that the caprolactam has a relative viscosity in chloroform comprised within the range of from 2.5 to 2.9.

4.  Polymeric compositions according to claim 1 and 2, characterized in that said ULDPE contains a grafted amount of from 0.1 to 0.6 g of a monomer which contains acidic or anhydride groups.

5.  Use of the polymeric compositions according to the preceding claims, in order to manufacture moulded and/or extruded pieces.